# EUROPÄISCHE PATENTSCHRIFT

(11) **EP 1 917 463 B1**
(45) Veröffentlichungstag und Bekanntmachung des Hinweises auf die Patenterteilung: **04.11.2009**
(21) Anmeldenummer: 06762953.5
(22) Anmeldetag: 03.08.2006
(51) Int. Cl.: F16K 31/60

(54) **SANITÄRER EINHEBELMISCHER**
SANITARY SINGLE-LEVER MIXER
MÉLANGEUR SANITAIRE À LEVIER UNIQUE

(30) Priorität: 25.08.2005 DE 102005040160
(43) Veröffentlichungstag der Anmeldung: 07.05.2008
(73) Patentinhaber: Hansa Metallwerke AG, 70567 Stuttgart (DE)
(72) Erfinder: HARSCH, Martin, 74395 Mundelsheim (DE); SCHMIDT, Heinz, 70567 Stuttgart (DE)
(74) Vertreter: Ostertag, Ulrich
(86) Internationale Anmeldenummer: PCT/EP2006/007670
(87) Internationale Veröffentlichungsnummer: WO 2007/022859

(56) Entgegenhaltungen:
- WO-A-89/00275
- DE-U1- 29 611 323
- US-A- 3 422 849

## Beschreibung

Die Erfindung betrifft einen sanitären Einhebelmischer, mit
a) einem Gehäuse, das einen nach oben offenen Aufnahmeraum aufweist;
b) einer in dem Aufnahmeraum angeordneten Steuereinrichtung, welche mindestens ein bewegliches, den Wasserstrom bestimmendes Steuerelement und einen sich nach oben erstreckenden Stellhebel aufweist, der um zwei senkrecht zueinander stehende Achsen verschwenkbar ist;
c) einem Handgriff, der an einem Ende mit dem Stellhebel verbunden ist;
d) einem dem Gehäuse zugeordneten Abschlußteil, das die obere Öffnung des Aufnahmeraumes abdeckt und eine mittlere Durchgangsöffnung aufweist, durch welche sich der Stellschaft oder der Handgriff hindurcherstreckt und das eine von oben gesehen konvexe, kugelkalottenförmige Oberseite besitzt;
e) einem dem Handgriff zugeordneten Abdeckteil, welches eine zur Oberseite des Abschlußteils im wesentlichen komplementäre Unterseite aufweist, die bei der Bewegung des Handgriffes auf der Oberseite des Abschlußteiles gleitet.

Sanitäre Einhebelmischer der o. g. Art sind in vielfältigster Ausgestaltung auf dem Markt erhältlich. Trotz einer Vielzahl von Gestaltungsvarianten im Design und in der detaillierten Ausgestaltung der Steuereinrichtung haben sie ein Problem gemeinsam: Um die Steuereinrichtung montieren und warten zu können, ist es erforderlich, daß der die Steuereinrichtung enthaltende Aufnahmeraum zugänglich ist. Die hierfür vorgesehene obere Öffnung des Aufnahmeraumes muß aus doppeltem Grunde in geeigneter Weise abgedeckt werden. Zum einen ist dies ein Gebot der Ästhetik; zum anderen muß verhindert werden, daß Schmutz und Wasser ins Innere des Einhebelmischers eindringen. Daher wird über der Öffnung des Aufnahmeraumes ein mit einer kugelkalottenförmigen Oberseite versehenes Abschlußteil aufgebracht. Durch dieses hindurch muß sich entweder der Stellhebel oder der Handgriff hindurch erstrecken, weshalb das Abschlußteil eine mittlere Durchgangsöffnung besitzt.

Damit der Stellhebel oder der Handgriff die bei der Verstellung des Steuerelementes erforderlichen Bewegungen ausführen kann, darf diese mittlere Durchgangsöffnung nicht zu klein sein. Es ist also eine weitere Maßnahme erforderlich, durch welche die - im Vergleich zur oberen Öffnung des Aufnahmeraumes - schon etwas kleinere Durchgangsöffnung des Abschlußteiles wiederum abgedeckt wird. Dies geschieht mit Hilfe eines mit dem Handgriff verbundenen Abdeckteiles, das mit seiner kugelkalottenförmigen Unterseite auf der Oberseite des Abschlußteiles gleitet. Es ist so dimensioniert, daß es in allen Positionen des Handgriffes die Durchgangsöffnung des Abschlußteiles abdeckt.

Da ein ideales, spaltfreies Gleiten des mit dem Handgriff verbunden Abdeckteiles auf dem dem Gehäuse zugeordneten Abschlußteil nicht möglich ist und immer wieder kleinste Partikel in den Spalt zwischen diesen beiden Elementen eindringen können, läßt sich bei den bekannten Einhebelmischern auf Dauer nicht vermeiden, daß die zeitweise vom Abdeckteil überdeckten und zeitweise vom Abdeckteil freigegebenen Bereiche an der Oberseite des Abschlußteiles verkratzen oder in anderer Weise unansehnlich werden.

Aus diesem Grunde wird in der WO 89/00275 A1, die ebenfalls einen gattungsgemäßen sanitären Einhebelmischer beschreibt, vorgeschlagen, das dem Gehäuse zugeordnete Abschlußteil noch einmal unter einer Sichthaube zu verbergen. Dies ist selbstverständlich verhältnismäßig aufwendig.

Aufgabe der vorliegenden Erfindung ist es, einen sanitären Einhebelmischer der eingangs genannten Art so auszugestalten, daß auf Dauer ein ästhetisches Erscheinungsbild gewährleistet ist.

Diese Aufgabe wird erfindugsgemäß dadurch gelöst, daß
f) das dem Handgriff zugeordnete Abdeckteil aus einem äußeren Sichtteil, das mit einer Sichtoberfläche versehen ist, und einem mit dem Sichtteil verbundenen Gleitteil, das aus einem gute Gleiteigenschaften aufweisenden Material besteht und an dem die kugelkalottenförmige Unterseite ausgebildet ist, zusammengesetzt ist.

Durch die erfindungsgemäß vorgeschlagene Zweiteiligkeit des dem Handgriff zugeordneten Abdeckteiles werden die beiden Funktionen, die dem Abdeckteil zukommen, auf unterschiedliche Elemente aufgeteilt, die speziell auf die jeweilige Funktion optimiert werden können.

Das äußere Sichtteil kann aus einem beliebigen, auch harten Material bestehen, das sich optimal zur Aufbringung einer beständigen Sichtoberfläche eignet. Das mit dem Sichtteil verbundene Gleitteil hingegen, das selbst von außen nicht zu sehen ist, wird im Blick auf eine gute Gleiteigenschaft ausgewählt. Wenn seine kugelkalottenförmige Unterseite auf der kugelkalottenförmigen, komplementären Oberseite des dem Gehäuse zugeordneten Abschlußteiles gleitet, ergeben sich nur sehr geringe Reibungskräfte. Das Material des Gleitteiles kann - zumindest im Bereich der Auflage auf dem Abschlußteil - auch mit einer gewissen Weichheit versehen werden, sodaß Partikel, die in den Spalt zwischen Abdeckteil und Abschlußteil gelangen, sich in dieses Material etwas eindrücken können. Hierdurch wird ein Verkratzen der Oberseite des Abschlußteiles effektiv vermieden.

Das Sichtteil besteht bevorzugt aus Metall. Das Gleitteil dagegen besteht dagegen vorzugsweise aus Kunststoff, insbesondere aus Polyoxymethylene.

Besonders vorteilhaft ist dasjenige Ausführungsbeispiel der Erfindung, bei welchem das Sichtteil das Gleitteil in radialer Richtung überragt, mit dem überstehenden Rand jedoch einen Abstand zur Oberseite des Abschlußteiles einhält. Hier ist das nicht auf Sichteigenschaften optimierte Gleitteil auch bei seitlicher Betrachtung nicht erkennbar, so daß die Ästhetik des Erscheinungsbildes besonders gut gewahrt ist.

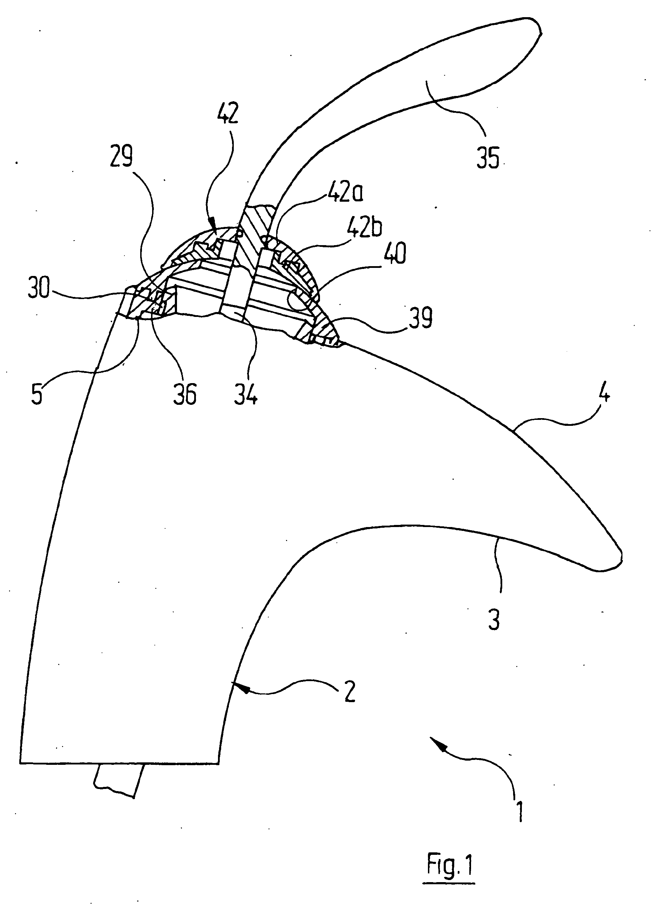

Ein Ausführungsbeispiel der Erfindung wird nachfolgend anhand der Zeichnung näher erläutert; es zeigen
- Figur 1: die Seitenansicht eines sanitären Einhebelmischers, teilweise im Schnitt;

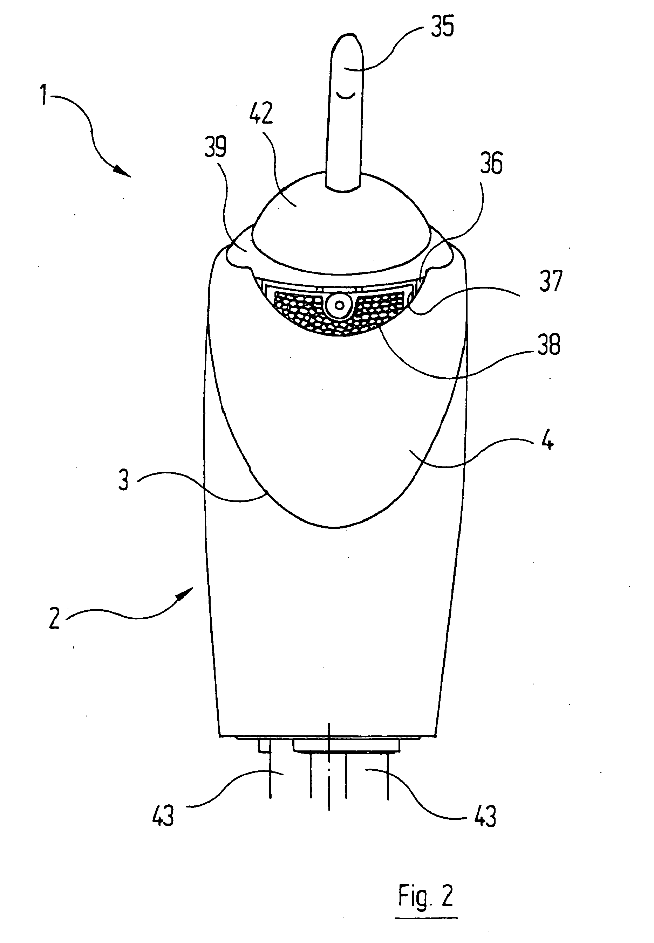

- Figur 2: die Vorderansicht des sanitären Einhebelmischers von Figur 1;

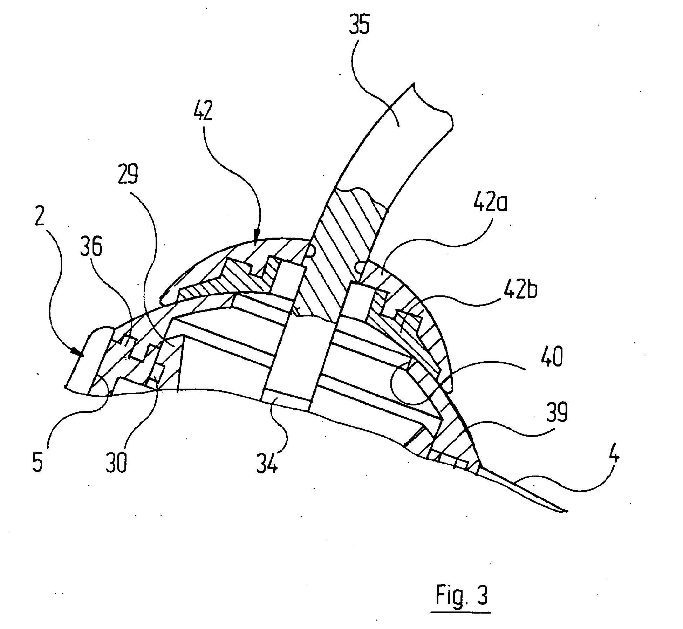

- Figur 3: eine Teilvergrößerung aus Figur 1 in dem dort geschnittenen Bereich.

Der in der Zeichnung dargestellte und insgesamt mit dem Bezugszeichen 1 gekennzeichnete sanitäre Einheelmischer umfasst ein gegossenes Gehäuse 2, an das ein Auslauf 3 angeformt ist. Der Auslauf 3 enthält im Gegensatz zu herkömmlichen sanitären Armaturen keinen bis zu einer Auslauföffnung geschlossenen Wasserkanal, sondern besitzt eine nach oben offene Auslaufrinne 4, also einen Auslaufbereich, der von oben her gesehen konkav gekrümmt ist. Auf die Einzelheiten des Auslaufes 3 kommt es jedoch im vorliegenden Zusammenhang nicht an.

In dem Gehäuse 2 ist ein nach oben offener, becherförmiger Aufnahmeraum 5 ausgespart, in welchem eine in der Zeichnung nicht sichtbare Steuereinrichtung angeordnet ist. Die Steuereinrichtung ist im vorliegenden Falle eine Steuerkartusche, welche in bekannter Weise die den Wasserstrom steuernden Elemente, im allgemeinen Steuerscheiben aus Keramik, enthält.

Aus der Steuerkartusche ragt in bekannter Weise ein Stellhebel 34 nach oben, der zur Veränderung der Menge des auslaufenden Wassers um eine senkrecht zur Zeichenebene stehende Achse verschwenkt und zur Veränderung der Temperatur des auslaufenden Wassers um eine in der Zeichenebene liegende Achse verdreht werden kann. An dem Stellhebel 34 ist in hier nicht näher interessierender Weise lösbar ein Handgriff 35 befestigt, der nach oben aus dem Gehäuse 2 der Waschtischarmatur 1 herausgeführt ist und der Betätigung durch den Benutzer dient.

In den oberen Endbereich des Aufnahmeraumes 5 des Gehäuses 2 ist ein Ring 36 eingesetzt, an dessen oberer Stirnseite beispielsweise durch Verklipsen oder Verkleben ein eine kugelkalottenförmige Oberseite besitzendes Abschlußteil 39 befestigt ist. Dieses weist eine mit der Achse des Aufnahmeraums 5 koaxiale Durchgangsbohrung 40 auf, durch welche sich der Handgriff 35 erstreckt.

An dem Handgriff 35 ist ein Abdeckteil 42 befestigt, das sowohl an der Ober- als auch an der Unterseite kugelkalottenförmig gekrümmt ist. Der Krümmungsradius an der Unterseite stimmt mit dem Krümmungsradius an der Oberseite des Abschlußteiles 39 im wesentlichen überein. Das Abdeckteil 42 umfasst ein äußeres Sichtteil 42a sowie ein mit diesem Sichtteil 42a verklebtes oder verklipstes Gleitteil 42b.

Das Sichtteil 42a besteht vorzugsweise aus Metall und ist mit einer Sichtoberfläche, beispielsweise einer Verchromung, versehen. Das Gleitteil 42b besteht aus einem gute Gleiteigenschaften aufweisenden Kunststoff, insbesondere aus Polyoxymethylene. Sein Durchmesser ist etwas geringer als derjenige des Sichtteiles 42a. Während das Gleitteil 42b mit seiner konkaven Unterseite auf dem Abschlußteil 39 entlanggleitet, ist der untere, radial außerhalb des Gleitteiles 42b liegende Rand des Sichtteiles 42a etwas nach oben versetzt, so daß dieser Rand nicht an dem Abschlußteil 39 zu liegen kommt.

Durch die oben beschriebene Ausgestaltung des sanitären Einhebelmischers 1 wird einerseits dessen Dichtheit nach oben hin ausreichend gewährleistet, dabei jedoch Sorge dafür getragen, daß die Bewegungen des mit dem Handgriff 35 verbundenen Abdeckteiles 42 auf der Oberseite des Abschlußteiles 39 nicht zu einer Beeinträchtigung von dessen Oberflächengüte führt.

## Patentansprüche

1. Sanitärer Einhebelmischer mit
a) einem Gehäuse (2), das einen nach oben offenen Aufnahmeraum (5) aufweist;
b) einer in dem Aufnahmeraum (5) angeordneten Steuereinrichtung, welche mindestens ein bewegliches, den Wasserstrom bestimmendes Steuerelement und einen sich nach oben erstreckenden Stellhebel (34) aufweist, der um zwei senkrecht zueinander stehende Achsen verschwenkbar ist;
c) einem Handgriff (35), der an einem Ende mit dem Stellhebel (34) verbunden ist;
d) einem dem Gehäuse zugeordneten Abschlußteil (39), das die obere Öffnung des Aufnahmeraumes abdeckt und eine mittlere Durchgangsöffnung (40) aufweist, durch welche sich der Stellschaft oder der Handgriff (35) hindurcherstreckt und das eine von oben gesehene konvexe, kugelkalottenförmige Oberseite besitzt;
e) einem dem Handgriff (35) zugeordneten Abdeckteil (42), welches eine zur Oberseite des Abschlußteiles (39) im wesentlichen komplementäre Unterseite aufweist, die bei der Bewegung des Handgriffes (35) auf der Oberseite des Abschlußteiles (39) gleitet;
**dadurch gekennzeichnet, daß**
f) das dem Handgriff (35) zugeordnete Abdeckteil (42) aus einem äußeren Sichtteil (42a), das mit einer Sichtoberfläche versehen ist, und einem mit dem Sichtteil (42a) verbundenes Gleitteil (42b), das aus einem gute Gleiteigenschaften aufweisenden Material besteht und an dem die kugelkalottenförmige Unterseite des Abdeckteiles (42) ausgebildet ist, zusammengesetzt ist.

2. Sanitärer Einhebelmischer nach Anspruch 1, **dadurch**
**gekennzeichnet, daß** das Sichtteil (42a) aus Metall besteht.

3. Sanitärer Einhebelmischer nach Anspruch 1 oder 2,
**dadurch gekennzeichnet, daß** das Gleitteil (42b) aus Kunststoff, insbesondere aus Polyoxymethylene, besteht.

4. Sanitärer Einhebelmischer nach einem der Ansprüche
1 bis 3, **dadurch gekennzeichnet, daß** das Sichtteil (42a) das Gleitteil (42b) in radialer Richtung überragt, mit dem überstehenden Rand jedoch einen Abstand zur Oberseite des Abschlußteiles (39) einhält.

## Claims

1. Sanitary single-lever mixer having,
a) a housing (2) which has a receiving compartment (5) which is open towards the top;
b) a control apparatus which is disposed in said receiving compartment (5) and has at least one movable control element which determines the flow of water, and an adjusting lever (34) which extends upwards and can be tilted about two axes which are perpendicular to one another;
c) a handle (35) which is connected, at one end, to the adjusting lever (34);
d) a closing part (39) which is associated with the housing, covers the upper aperture in the receiving compartment and has a central through-aperture (40) through which the adjusting shaft or the handle (35) extends, and which closing part (39) possesses an upper side which, viewed from above, is convex and spherical;
e) a covering part (42) which is associated with the handle (35) and has an underside which is essentially complementary to the upper side of the closing part (39) and slides on said upper side when the handle (35) moves;
**characterised in that**
f) the covering part (42) associated with the handle (35) is made up of an outer, visible part (42a) which is provided with a visible surface, and a sliding part (42b) which is connected to said visible part (42a) and consists of a material having good sliding properties, and on which the spherical underside of said covering part (42) is constructed.

2. Sanitary single-lever mixer according to claim 1, **characterised in that** the visible part (42a) consists of metal.

3. Sanitary single-lever mixer according to claim 1 or 2, **characterised in that** the sliding part (42b) consists of plastic, in particular polyoxymethylene.

4. Sanitary single-lever mixer according to one of claims 1 to 3, **characterised in that** the visible part (42a) projects beyond the sliding part (42b) in the radial direction, but maintains a distance from the upper side of the closing part (39) by means of the protruding rim.

## Revendications

1. Mélangeur sanitaire à levier unique, comprenant
a) un corps (2) muni d'un logement (5) ouvert vers le haut ;
b) un dispositif de commande situé dans ledit logement (5) et comportant au moins un élément mobile de commande qui détermine l'écoulement d'eau, et un levier de réglage (34) qui s'étend vers le haut et peut pivoter autour de deux axes perpendiculaires l'un à l'autre ;
c) une poignée (35) reliée au levier de réglage (34) par une extrémité ;
d) une pièce de fermeture (39) associée au corps, qui recouvre l'ouverture supérieure du logement, présente un orifice central de passage (40) traversé par l'axe de réglage ou par la poignée (35), et possède une face supérieure en forme de calotte sphérique convexe observée par en haut ;
e) une pièce de recouvrement (42) associée à la poignée (35) et dotée d'une face inférieure qui est sensiblement complémentaire de la face supérieure de la pièce de fermeture (39), et glisse sur ladite facé supérieure de ladite pièce de fermeture (39) lors du mouvement de ladite poignée (35) ;
**caractérisé par le fait que**
f) la pièce de recouvrement (42) associée à la poignée (35) est composée d'une pièce extérieure visible (42a) offrant une surface visible, et d'une pièce de glissement (42b) qui est reliée à ladite pièce visible (42a), consiste en un matériau doué de bonnes propriétés de glissement, et sur laquelle est façonnée la face inférieure de ladite pièce de recouvrement (42), configurée en une calotte sphérique.

2. Mélangeur sanitaire à levier unique, selon la revendication 1, **caractérisé par le fait que** la pièce visible (42a) est constituée d'un métal.

3. Mélangeur sanitaire à levier unique, selon la revendication 1 ou 2, **caractérisé par le fait que** la pièce de glissement (42b) est constituée d'une matière plastique, notamment de polyoxyméthylène.

4. Mélangeur sanitaire à levier unique, selon l'une des revendications 1 à 3,
**caractérisé par le fait que** la pièce visible (42a) fait saillie radialement au-delà de la pièce de glissement (42b), mais conserve toutefois, par le bord saillant, une distance vis-à-vis de la face supérieure de la pièce de fermeture (39).
